(19) Europäisches Patentamt
European Patent Office
Office européen des brevets

(11) Publication number: **0 157 531**
**B1**

(12) **EUROPEAN PATENT SPECIFICATION**

(45) Date of publication of patent specification: **28.12.88**

(51) Int. Cl.⁴: **A 23 D 5/00,** A 21 D 8/08

(21) Application number: **85301874.5**

(22) Date of filing: **18.03.85**

# (54) Cooking fat compositions.

(30) Priority: **30.03.84 US 595193**

(43) Date of publication of application:
**09.10.85 Bulletin 85/41**

(45) Publication of the grant of the patent:
**28.12.88 Bulletin 88/52**

(84) Designated Contracting States:
**BE CH DE FR GB IT LI NL**

(56) References cited:
**GB-A-1 197 678**
**GB-A-2 002 806**
**US-A-3 355 302**

**PATENTS ABSTRACTS OF JAPAN, vol. 4, no. 182 (C-35) 664r, 16th December 1980; & JP - A - 55 120 746 (RIKEN VITAMIN OIL K.K.) 17-09-1980**

(73) Proprietor: **THE PROCTER & GAMBLE COMPANY**
**301 East Sixth Street**
**Cincinnati Ohio 45201 (US)**

(72) Inventor: **Purves, Edward Robert**
**11725 Hollingsworth Way**
**Cincinnati Ohio 45240 (US)**
Inventor: **Thomas, Robert Frederick**
**6470 Duet Lane**
**Cincinnati Ohio 45239 (US)**

(74) Representative: **Brooks, Maxim Courtney et al**
**Procter & Gamble (NTC) Limited Whitley Road**
**Longbenton**
**Newcastle-upon-Tyne NE12 9TS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention relates to a cooking fat composition containing an anti-sticking agent. More particularly, this invention relates to cooking fats comprising a phosphate salt, or mixtures thereof.

During cooking of foods on a hot surface the food often sticks to the surface. Cooking fats are employed to coat the surface as an aid in eliminating such sticking. Two performance problems of currently available cooking fats are the development of a dark brown color and development of off-flavors if the fat is held too long on the heated surface. These are caused by the presence of lecithin which is commonly added to cooking fats as an anti-sticking agent. Lecithin aids in decreasing food sticking but the amount which can be used in the cooking fat is limited due to the color development and off-flavor development. Fats containing a higher than normal level of lecithin to enhance the anti-sticking properties darken and develop off flavors more quickly.

Despite its disadvantages, lecithin is widely used as an anti-sticking agent in cooking fats. For example, see the following patents disclosing fat-based cookware surface sprays containing lecithin as an anti-sticking agent: US—A—3,896,975, US—A—4,142,003, US—A—4,155,770, US—A—4,163,676 and US—A—4,188,412.

Several fat or oil additives are known for inhibiting darkening of phospholipids such as lecithin upon heating. These additives are primarily acidic or weakly basic compounds such as amino acid salts, carboxylic acids and derivatives, or salts of carbonates or bicarbonates. Inhibition of discoloration of phospholipids in fatty oils during heating can be achieved by the addition to the oil of a mixture of an acidic amino acid salt and a basic amino acid salt chosen from salts of arginine and glutamic acids, lysine and glutamic acids, or lysine and aspartic acid. In addition, sodium glutaminate, acidic anhydride, or alkali metal acetate can be employed.

Pretreatment of lecithin to prevent thermal browning in heated fat compositions is taught by Japan Patent 54,400, issued April 21, 1980. The pretreatment comprises heating the lecithin in an inert atmosphere either alone or diluted with a fat at 150°C to 230°C (302°F to 446°F) for 5 minutes to 1 hour.

Japan patent 91,910, issued August 12, 1978, discloses the stabilization of vegetable oil fatty acid monoglyceride quality by the addition of 0.001 to 0.1% by weight of disodium phosphate, trisodium phosphate, dipotassium phosphate, and/or tripotassium phosphate. The oxidation of carotene and tacopherols present in slight amounts is depressed to prevent coloration. Soybean, palm, cottonseed and coconut oil are specified as examples of suitable vegetable oils. The phosphates are added with stirring as an aqueous solution the oil heated to 80 to 100°C. Solvents such as propylene glycol, sorbitol, or glycerin, are employed to assure uniformity of the mixture.

US—A—3,355,302 and GB—A—1,197,678 disclose a plastic shortening suitable for frying and baking containing 0.2% to 1.0% by weight of a $C_{12}$ to $C_{22}$ fatty acid monoester of polyoxyethylene sorbitan containing an average of about 20 oxyethylene units per molecule. The fatty acid monoester is preferably acid treated and/or the shortening contains about 0.01% to 0.25% by weight of an oil-insoluble water-soluble salt of phosphoric acid. Suitable salts include: sodium metaphosphate; sodium phosphate, dibasic, hexahydrate; tetrapotassium pyrophosphate, anhydrous; tetrasodium pyrophosphate, decahydrate; sodium phosphate tribasic; sodium phosphate, monobasic; sodium glycerophosphate; sodium phosphate, dibasic, anhydrous; Graham's salt; and sodium hexametaphosphate having an average of 14 metaphosphate monomer units per molecule. The salts of phosphoric acid are employed specifically to reduce spatter and to aid in improving temperature recoverability of the shortening during frying.

These references disclose fat and shortening compositions containing phosphate salts as an anti-spattering agent and to suppress color development, but not that phosphate salts are effective as an anti-sticking agent and can be used as a substitute for lecithin. Eliminating the use of lecithin as a component of cooking fat compositions eliminates the resulting problems of thermal browning and off-flavor development when the fat is used in frying or grilling.

Accordingly, it is an object of the present invention to provide a novel anti-sticking agent for use in cooking fats.

It is a further object of the present invention to provide fat compositions having effective anti-sticking properties in the absence of lecithin.

It is a further object of the present invention to provide fat compositions having effective anti-sticking properties in the presence of reduced levels of lecithin.

It is a further object of the present invention to provide fat compositions containing an anti-sticking agent with improved color and flavor during use.

It is a further object of the present invention to provide a novel process for reducing sticking of food during cooking.

These and other objects of the invention will be evident from the following disclosure.

According to the present invention, there is provided a frying or grilling cooking fat composition, the composition being free of polyoxyethylene ethers of sorbitan partial esters and comprising:

(a) a major amount of edible triglycerides having saturated or unsaturated $C_{12}$ to $C_{22}$ fatty acid moieties;

(b) at least 0.001% of a salt of an oxyacid of phosphorus of formula MX as an anti-sticking agent,

wherein M comprises alkali metal, alkali earth metal, mixed alkali metal-other metal, or ammonium and X comprises hypophosphate, orthophosphate, pyrophosphate, polyphosphate, or metaphosphate.

An improved cooking fat composition containing such a salt, or mixtures thereof, resists the thermal darkening and off-flavor development normally associated with the use of lecithin as an anti-sticking agent. When lecithin is omitted, a cooking fat with improved color and flavor during use results. The salt can also be used in the presence of lecithin or reduced levels of lecithin, with color and off-flavor development retarded in proportion to the lecithin reduction.

The fat composition of the present invention comprises primarily triglycerides having saturated or unsaturated $C_{12}$ to $C_{22}$ fatty acid moieties, preferably containing a suspension of particulate triglyceride hardstock. The salt is present at a level of at least 0.001% by weight of the composition, preferably at a level of from 0.01% to 0.5% by weight of the composition.

This invention comprises a novel anti-sticking agent for use in frying or grilling cooking fats. It has been found that the hereindefined phosphate salts, or mixtures thereof, are effective as anti-sticking agents in cooking fats. Elimination of lecithin as an anti-sticking agent results in an improved cooking fat which resists off-flavor development and thermal darkening. The salts can also be used in the presence of lecithin or reduced levels of lecithin, with color and off-flavor development retarded in proportion to the lecithin reduction.

The term "lecithin" as used herein is defined as commercial lecithin, typically containing about 60% of three major phospholipids, i.e., phosphatidyl choline, phosphatidyl ethanolamine, and phosphatidyl inositide, about 5% to 7% oligosaccharides, and about 33% to 35% oil.

Fats suitable for use in the present invention include all edible fats or oils which are solid, plastic, liquid or fluid, i.e., pourable or fluid when heated to temperatures normally encountered in cooking operations of from about 200°F (93°C) to about 500°F (260°C). The fats comprise triglycerides having $C_{12}$ to $C_{22}$ fatty acid moieties. The cooking fat compositions of the present invention comprise the edible triglycerides and minor components in an amount up to 99.999% by weight of the composition. The former materials can be derived from plants or animals or can be edible synthetic fats or oils. Animal fats such as lard, tallow, oleo oil, oleo stock and oleo stearin, can be used. Also, liquid oils such as unsaturated oils, or liquid oils converted into plastic fats by partial hydrogenation of the unsaturated double bonds of the fatty acid constituents, or by proper mixture with a sufficient amount of solid triglycerides, are suitable.

Preferred fats are fluid fats having a sufficiently low content of triglycerides of melting point higher than about 60°F (16°C), as to provide upon cooling of the composition from about 100°F (38°C) to about 60°F (16°C), an increase in the amount of solids of not more than about 20%. Such fats are fully pourable at room temperature. Liquid glycerides useful herein comprise primarily triglycerides having $C_{12}$ to $C_{22}$ fatty acid moieties which can be saturated or unsaturated. They can be derived from any of the naturally occurring glyceride oils such as soybean oil, cottonseed oil, peanut oil, rapeseed oil, sesame seed oil and sunflower seed oil. Also suitable are liquid oil fractions obtained from palm oil, lard and tallow, as for example by graining or directed interesterification followed by separation of the oil.

The fluid fat preferably includes triglycerides having acyl groups predominantly in the range of from 16 to 22 carbon atoms and having a polyunsaturated character. Preferred polyunsaturated triglycerides include those derived from soybean, cottonseed, peanut, safflower and sunflower seeds. The preferred fluid fat contains a suspension of a triglyceride hardstock constituent in particulate form. The hardstock constituent usually amounts to from 0.5% to 15% by weight of the fat, preferably from 2% to 5% by weight. The hardstock constituents comprises substantially fully hydrogenated normally solid fatty triglycerides, and optionally a normally solid fatty emulsifier. The hardstock constituent ordinarily has an iodine value of less than 15, preferably it has an iodine value ranging from 1 to 12. The normally solid fatty triglycerides in the hardstock constituent ordinarily contain in each of their fatty acid moieties from 12 to 22 carbon atoms. The hardstock normally has a particle size in the range of from about 3 to about 100 μm to allow the fat to have a stable liquid or fluid state.

Various additives can be used in the cooking fats of this invention as minor components consistent with the ultimate end use, which primarily comprises various types of frying or griddling. The compositions of this invention can normally contain optional amounts of flavorings, emulsifiers, anti-spattering agents, anti-foaming agents and antioxidants.

The salts of the oxyacids of phosphorus effective as anti-sticking agents in the present invention comprise inorganic salts represented by the formula MX, wherein M comprises an alkali metal, alkali earth metal, mixed alkali metal-other metal or ammonium, and X comprises an hypophosphate, orthophosphate, pyrophosphate, polyphosphate, or metaphosphate.

Particularly suitable alkali metal and alkali earth metals include sodium, potassium and calcium. The hypophosphate anion can be represented by the general structure $P_2O_6$. Examples of suitable hypophosphate salts include

$$Na_4P_2O_6 \,.\, 10H_2O,\ Na_3HP_2O_6 \,.\, 9H_2O,\ Na_2H_2P_2O_6 \,.\, 6H_2O,\ Ca_2P_2O_6 \,.\, 2H_2O,\ (NH_4)_2H_2P_2O_6,$$

and other similar salts.

All of the hydrogens in orthophosphoric acid are replaceable with metal ions. Therefore, many forms of the orthophosphates exist and can be used in the present invention. Examples of suitable compounds

include, but are not limited to, the following. Sodium orthophosphates suitable for use in the present invention include:

$NaH_2PO_4$, $NaH_2PO_4 . H_2O$, $NaH_2PO_4 . 2H_2O$, $2NaH_2PO_4 . Na_2HPO_4 . 2H_2O$, $NaH_2PO_4 . Na_2HPO_4$, $NaH_2PO_4 . H_3PO_4$, $Na_2HPO_4$, $Na_2HPO_4 . 2H_2O$, $Na_2HPO_4 . 7H_2O$, $Na_2HPO_4 . 8H_2O$, $Na_2HPO_4 . 12H_2O$, $Na_3PO_4$, $Na_3PO_4 . 1/2H_2O$, $Na_3PO_4 . 6H_2O$, $Na_3PO_4 . 8H_2O$, $Na_3PO_4 . 10H_2O$, and $Na_3PO_4 . 12H_2O$.

Potassium orthophosphates suitable for use in the present invention include

$K_3PO_4$, $K_2PO_3 . 4H_2O$, $KH_5(PO_4)_2$, $KH_2PO_4$, $KH_2PO_4 . 2K_2HPO_4 . H_2O$, $KH_2PO_4 . 3K_2HPO_4 . 2H_2O$, $K_2HPO_4$, $K_2HPO_4 . 3H_2O$, $K_2HPO_4 . 6H_2O$, $K_3HPO_4 . 3H_2O$, $K_3HPO_4 . 7H_2O$, and $K_3HPO_4 . 9H_2O$.

Calcium phosphates which are useful herein include

$Ca(PO_3)_2$, $Ca(H_2PO_4)_2$, $CaH_4(PO_4)_2 . H_2O$, $Ca_8H_2(PO_4)_6 . 5H_2O$, $Ca_{10}(PO_4)_6(OH)_2$, $CaHPO_4$, $CaHPO_4 . 2H_2O$, $Ca_3(PO_4)_2$, and $Ca_5(PO_4)_3OH$.

Many orthophosphates contain two or more cations. Suitable alkali metal—other metal phosphates for use in the present invention include

$NaAl_3H_{14}(PO_4)_8 . 4H_2O$ and $Na_3Al_2H_{15}(PO_4)_8$.

Ammonium orthophosphates suitable for use in the present invention include

$NH_4H_2PO_4$, $NH_4H_5(PO_4)_2 . H_2O$, $NH_4H_5(PO_4)_2$, $NH_4H_2PO_4$, $(NH_4)_2HPO_4$, $2(NH_4)_2HPO_4 . (NH_4)_3PO_4$, and $(NH_4)_3PO_4 . 3H_2O$.

The structure of the pyrophosphate anion consists of two $PO_4$ tetrahedra bridged by a mutual oxygen atom. The size of the central P-O-P angle varies with different metal pyrophosphates. Pyrophosphates have a great tendency to occur in polymorphic phases and this polymorphism may be due to three kinds of structure arrangements: (a) linear ions with P-O-P angle equal to 180°, (b) nonlinear ions with P-O-P angle of less than 180°, or (c) statistically linear ions derived from suitable arrangement of nonlinear ions. Examples of pyrophosphates that can be used in the present invention include, but are not limited to, the following. Sodium pyrophosphates

$Na_4P_2O_7 . 10H_2O$, $Na_4P_2O_7$, $Na_3HP_2O_7 . 9H_2O$, $Na_3HP_2O_7 . H_2O$, $Na_3HP_2O_7$, $Na_2H_2P_2O_7 . 6H_2O$, $Na_2H_2P_2O_7$, and $NaH_3P_2O_7$

can be used in the present invention. Potassium pyrophosphates include

$K_4P_2O_7$, $K_4P_2O_7 . H_2O$, $K_4P_2O_7 . 3H_2O$, $K_2H_2P_2O_7$, and $K_2H_2P_2O_7 . \frac{1}{2}H_2O$.

Calcium pyrophosphates, $Ca_2P_2O_7$, $Ca_2P_2O_7 . 5H_2O$, exist in several polymorphic states, many of which are useful in the present invention. Ammonium pyrophosphates useful herein include

$(NH_4)_4P_2O_7$, $(NH_4)_4P_2O_7 . H_2O$, $(NH_4)_3HP_2O_7$, $(NH_4)_3HP_2O_7 . H_2O$, and $(NH_4)_2H_2P_2O_7$.

The polyphosphate anion may be represented by the general formula $P_3O_{10}$. Polyphosphates include tripolyphosphates, tetrapolyphosphates and other higher polyphosphates. Polyphosphates of sodium, potassium, calcium and ammonium are known and suitable for use in the present invention. Examples include

$Na_5P_3O_{10}$, $K_5P_3O_{10}$, $Na_6(P_4O_{13})$, $(NH_4)_6P_4O_{13} . 6H_2O$, $(NaPO_3)_3 . 6H_2O$, and $(KPO_3)_4 . 2H_2O$.

Cyclic metaphosphates are also suitable for use in the present invention and include trimetaphosphates, tetrametaphosphates, and higher membered ring metaphosphates. Examples include $(NaPO_3)_3$, $(NaPO_3)_4$, $(NaPO_3)_6$ and $(KPO_3)_6$.

Of the above salts effective as anti-sticking agents in the present invention the following are preferred:

$NaH_2PO_4$, $NaH_2PO_4 . H_2O$, $Na_2HPO_4$, $Na_3PO_4$, $CaH_4(PO_4)_2$, $CaHPO_4$, $Ca_3(PO_4)_2$, $Ca_5(PO_4)_3OH$, $KH_2PO_4$, $NH_4H_2PO_4$, $Na_4P_2O_7$, $Na_3HP_2O_7$, $Na_3Al_2H_{15}(PO_4)_8$, and $(NaPO_3)_6$.

To be effective as an anti-sticking agent the salt must be present in an amount of at least 0.001% by weight of the fat composition. Preferably the phosphate salt is present in an amount of from 0.01% to 0.5% by weight of the composition.

The salt can be added to the fat composition as a solution, as a particulate, or formed in-situ. Heating a small amount of the fat composition in an oven at about 150°F (66°C) for about 30 minutes aids in dispersing particulate salts prior to diluting in the remainder of the fat composition. Particle size can possibly affect anti-sticking performance for some salts, and size should be optimized for a specific composition.

The salt can be formed in-situ by adding appropriate reactants to the fat composition, for example, an oxyacid of phosphorus and an alkali, alkali metal, or ammonium compound. Preferred oxyacids include orthophosphoric acid, pyrophosphoric acid, polyphosphoric acid, or metaphosphoric acid. Preferably the oxyacid is heated with a carbonate or bicarbonate of sodium, potassium, calcium, or ammonium. Other

appropriate reactants within the skill of the art can be employed if chosen to prevent the formation of byproducts detrimental to the properties of the fat composition.

Kettle browning test method

Comparison of fat composition discoloration in all compositions was via a standard kettle browning test method. A kettle was filled with liquid oil at a specified level, heated, and maintained at 350°F (177°C). Four hundred grams of the composition to be tested were placed into each of four beakers. The beakers were placed in a rack on top of the kettle in a manner such that they were predominantly immersed in the oil contained within the kettle. A thermometer was placed in each beaker. The compositions were heated to 340°F (171°C). The compositions were then sampled and the absorbance measured for each using a spectrophotometer. Reference compositions were tested in the same manner. Reference samples comprised the fat composition being tested with no lecithin component or with an untreated lecithin component present at the same concentration as in the test sample. Absorbance readings for each test and reference composition were obtained on a Varian Series 634 U.V.—Visible Spectrophotometer set at a wavelength of 534 nm. at periodic time intervals after continuous heating of the samples. Test samples containing solids resulted in inaccurate absorbance readings. When this occurred, samples were heated to a higher temperature to dissolve the solids, or alternatively, samples and reference compositions were filtered and reheated prior to measuring their absorbance.

Pan-sticking test

A pan-sticking test was employed to determine the anti-sticking performance of fats when used for pan frying. The fat to be tested was first heated to 125°F (52°C) in a constant temperature bath. A gas stove equipped with a gas flow meter was employed. After lighting the flame the gas flow was adjusted to $9.9\times10^{-2}$ $m^3$ (3.5 standard cubic feet) per hour. Eggs were warmed to room temperature and cracked into 400 ml. beakers, one egg per beaker. The frying pan was seasoned by placing 400 g. of fat into the pan and heating on the stove for ten minutes. The fat was then discarded and the pan wiped with a paper towel. The pan was returned to the flame and preheated to 400°F (204°C). The pan interior was then coated quickly with 2 cc. of the fat. The egg was added and cooked for 1 minute and 10 seconds. The pan was removed from the flame and tilted at a 90° angle to grade sticking performance according to the following scale. The pan was wiped with a paper towel to remove any stuck egg and residual oil. The test was then repeated 10 times for each fat sample beginning at the point of preheating the pan to 400°F (204°C).

Pan sticking test grading scale

| Grade | % Sticking | Amount of force |
|---|---|---|
| 10 | 0 | Tilt of the pan |
| 9 | 1—5 | Tilt of the pan |
| 8 | 6—10 | Tilt of the pan |
| 9 | 0 | Two shakes with the pan at 90° |
| 8 | 1—5 | Two shakes with the pan at 90° |
| 7 | 6—10 | Two shakes with the pan at 90° |
| 6 | 11—20 | Two shakes with the pan at 90° |
| 8 | 0 | Pan upside down for 5 sec. |
| 7 | 1—5 | Pan upside down for 5 sec. |
| 6 | 5—10 | Pan upside down for 5 sec. |
| 7 | 1—5 | Stuck surface must be loosened with a spatula |
| 6 | 5—10 | Stuck surface must be loosened with a spatula |
| 5 | 11—20 | Stuck surface must be loosened with a spatula |
| 4 | 21—30 | Stuck surface must be loosened with a spatula |
| 3 | 31—50 | Stuck surface must be loosened with a spatula |
| 2 | 51—75 | Stuck surface must be loosened with a spatula |
| 1 | 76—100 | Stuck surface must be loosened with a spatula |

The following embodiments illustrate the practice of this invention, but are not intended to limit it. All

percentages are by weight unless otherwise specified. The designation "ppm" is used herein to mean parts per million as micrograms per gram.

Example 1

Example 1 illustrates that phosphate salts formed in situ are effective as anti-sticking agents.

Various amounts of lecithin, a 22% solution of sodium carbonate ($Na_2CO_3$), and a 70% solution of orthophosphoric acid ($H_3PO_4$) as shown in Table I were added to a fluid vegetable shortening containing trace amounts of coconut oil, carotene, and flavors. The shortening comprised primarily triglycerides having $C_{12}$ to $C_{22}$ fatty acid moieties and contained from about 0.5% to about 15% by weight of a suspension of triglyceride hardstock in particulate form. A sample of the shortening containing no added lecithin, sodium carbonate, or orthophosphoric acid was employed as a reference. The samples were heated in an oven for about 30 minutes at about 150°F (66°C) and were then filtered. The filtrates were subjected to the pan-sticking test previously described. As shown in Table I, the compositions containing both $Na_2CO_3$ and $H_3PO_4$ had higher sticking grades than those with only lecithin or lecithin plus $Na_2CO_3$. The above procedure was repeated using the same shortening with no added lecithin, and with various amounts of added $Na_2CO_3$ and $H_3PO_4$, as shown in Table I. No filtration step was performed on these samples. Again, the compositions containing both $Na_2CO_3$ and $H_3PO_4$ had higher sticking grades than those containing no additives or only $Na_2CO_3$.

TABLE I

| | Fat additives | | | Sticking |
|---|---|---|---|---|
| | Lecithin, % | $Na_2CO_3$, % | $H_3PO_4$, % | grade |
| I. | 0.4 | 0 | 0 | 8.0 |
| | 0.4 | 0.05 | 0 | 8.3 |
| | 0.4 | 0.05 | 0.003 | 9.2 |
| II. | 0 | 0 | 0 | 6.2 |
| | 0 | 0.01 | 0 | 4.6 |
| | 0 | 0.01 | 0.006 | 8.4 |
| | 0 | 0.02 | 0.012 | 7.4 |

Example 2

Calcium phosphate in the concentrations shown on Table II was added with mixing to 3600 grams of the fluid vegetable shortening of Example 1. A sample of the shortening with no added salt was employed as a reference. Samples containing added salt and containing 0.06% and 0.09% lecithin were also tested. All samples were heated in an oven for about 30 minutes at about 150°F (66°C). The samples were subjected to the pan-sticking test previously described. The lecithin-containing samples and one of the salt-containing samples were subjected to the kettle browning test previously described. The resulting data are summarized in Table II. The samples containing calcium phosphate as an anti-sticking agent had sticking grades comparable to the samples containing lecithin. The phosphate salt samples were much lower in color intensity than the lecithin samples as shown by the lower absorbance reading.

TABLE II

| Anti-sticking agent | Level | pH | Particle size | Absorbance 4 hours | Sticking grade |
|---|---|---|---|---|---|
| None | | | | | 6.2 |
| Calcium Phosphate | | | | | |
| $CaH_4(PO_4)_2 . H_2O$ | 100 ppm | 4.5 | Coarse | | 7.9 |
| | 100 ppm | | Fine | | 8.5 |
| | 250 ppm | | Coarse | | 8.1 |
| $CaHPO_4$ | 100 ppm | 7.5 | Coarse | | 7.5 |
| $Ca_3(PO_4)_2$ | 100 ppm | | Fine | .01 | 8.7 |
| | 50 ppm | | Fine | | 8.6 |
| | 250 ppm | | Fine | | 8.3 |
| $Ca_3(PO_4)_2$+0.06% Lecithin | 100 ppm | | Fine | .04 | 8.7 |
| $Ca_3(PO_4)_2$+0.09% Lecithin | 100 ppm | | Fine | .08 | 7.6 |

Example 3

Sodium phosphate in the amounts shown in Table III was added with mixing to 3600 grams of the fluid vegetable shortening of Example 1. The samples were treated as in Example 2 and subjected to the pan-sticking test previously described. The resulting data are summarized in Table III.

TABLE III

| Anti-sticking agent | Level | pH | Physical form | Sticking grade |
|---|---|---|---|---|
| None | | | | 6.2 |
| Sodium Phosphate | | | | |
| $Na_2HPO_4 . H_2O$ | 100 ppm | 4.3 | 22% Soln | 5.5 |
| | | | — | 7.2 |
| $Na_2HPO_4$ | 100 ppm | 9.1 | 22% Soln | 8.1 |
| | 250 ppm | | 42% Soln | 7.8 |
| $Na_3PO_4$ | 50 ppm | 11.8 | Coarse | 8.4 |
| | 100 ppm | | Coarse | 7.9 |
| | 100 ppm | | Fine | 8.1 |
| | 100 ppm | | 22% Soln | 7.9 |
| | 250 ppm | | Coarse | 5.8 |

Example 4

Potassium phosphate, ammonium phosphate, and sodium aluminum phosphate, at a level of 100 ppm each, were added with mixing to the shortening composition of Example 1. The samples were treated as in Example 2 and subjected to the pan-sticking test previously described. The resulting data are summarized in Table IV.

TABLE IV

| Anti-sticking agent | Level | pH | Physical form | Sticking grade |
|---|---|---|---|---|
| None | | | | 6.2 |
| Potassium phosphate | | | | |
| $KH_2PO_4$ | 100 ppm | 4.6 | 22% Soln | 5.6 |
| | 100 ppm | | Coarse | 8.3 |
| | 100 ppm | | Fine | 7.6 |
| Ammonium Phosphate | | | | |
| $NH_4H_2PO_4$ | 100 ppm | 4.4 | 22% Soln | 6.9 |
| | 100 ppm | | Coarse | 8.1 |
| | 100 ppm | | Fine | 6.9 |
| Sodium Aluminium Phosphate | 100 ppm | 2.4 | Coarse | 7.6 |

Example 5

Sodium pyrophosphate and sodium hexametaphosphate in the amounts shown in Table V were added with mixing to the shortening composition of Example 1. The samples were treated as in Example 2 and subjected to the pan-sticking test previously described. The resulting data are summarized in Table V.

TABLE V

| Anti-sticking agent | Level | pH | Particle size | Absorbance 4 hours | Sticking grade |
|---|---|---|---|---|---|
| None | | | | | 6.2 |
| Sodium pyrophosphate | | 13.1 | | | |
| | 50 ppm | | 22% Soln | | 7.8 |
| | 50 ppm | | 15% Soln | .002 | 8.7 |
| | 100 ppm | | Coarse | | 6.9 |
| | 100 ppm | | 22% Soln | .008 | 8.8 |
| | 100 ppm | | Fine | .006 | 7.8 |
| | 250 ppm | | 22% Soln | | 6.8 |
| Sodium pyrophosphate (100 ppm)+.06% lecithin | | | 22% Soln | .027 | 9.0 |
| Sodium acid pyrophosphate | | 4.2 | | | |
| | 50 ppm | | Fine | | 7.8 |
| | 100 ppm | | Fine | | 8.2 |
| | 250 ppm | | Fine | | 6.9 |
| Sodium hexametaphosphate | | — | | | |
| | 100 ppm | | 22% Soln | | 7.7 |
| | 100 ppm | | Coarse | | 7.5 |
| | 250 ppm | | Fine | | 7.6 |
| | 1250 ppm | | Fine | | 7.9 |

Example 6

The shortening composition disclosed in US—A—3,355,302 was prepared containing 0.5% by weight Tween® 60 and sodium hexametaphosphate at the level shown in Table VI. No lecithin was present. The compositions were tested using the pan-sticking and kettle-browning tests previously described. The resulting data was summarized in Table VI. No appreciable product browning was observed. The pan-sticking values demonstrate that the sodium hexametaphosphate did not function as an anti-sticking agent in this composition. It is hypothesized that the polyoxyethylene ethers of sorbitan partial esters (Tweens®) possibly interfere with the anti-sticking function. Each pan-sticking value represents an average of 20 eggs tested.

TABLE VI

| Composition | Absorbance 4 hours | Sticking grade |
|---|---|---|
| Fat+Tween 60 | 0.0 | 7.9 |
| Fat+Tween 60+100 ppm Na Hexametaphosphate | 0.0 | 8.6 |
| Fat+Tween 60+250 ppm Na Hexametaphosphate | 0.002 | 7.1 |
| Fat+Tween 60+2500 ppm Na Hexametaphosphate | 0.0 | 7.0 |

Example 7

Example 7 illustrates that 1) the flavor of shortening containing a phosphate salt as an anti-sticking agent is equivalent to the same shortening containing lecithin, and 2) off-flavor development upon heating for shortening containing a phosphate salt as an anti-sticking agent is less than for the same shortening containing lecithin as an anti-sticking agent.

Various amounts of lecithin, sodium pyrophosphate and tribasic calcium phosphate, as shown in Table VII, were added to the shortening composition of Example 1. The sample containing lecithin was used as a standard and assigned a value of 10. The other compositions were evaluated by taste panels for both fresh flavor and off-flavor compared to the standard. The scale for evaluation was as follows: 10=identical to standard, 9=not different, 8=slightly different, 7=different, and 6=very different. A + or − was then assigned to indicate better or worse flavor. A + indicated better flavor than the standard and a − indicated worse flavor than the standard. Samples were compared on a fresh basis and the resulting data are summarized in Table VII-A. The fresh flavor grades for shortenings containing phosphate salts are

comparable to that for the shortening containing lecithin indicating that the salts did not affect fresh flavor. The samples were then evaluated after browning for 4 hours at 270°F (132°C). The shortening containing lecithin, which is known to develop off-flavor, was assigned a value of 10. The other samples were compared to it using the scale described above for degrees of differences and a + or − to indicate better or worse flavor, respectively, than the standard. The resulting data are summarized in Table VII-B. The browned flavor grades indicated a difference in flavor. The + indicated the shortenings containing phosphate salts had better flavor than the standard, and therefore that the salts decreased off-flavor. A greater difference in grades corresponded to a greater improvement in flavor.

TABLE VII-A

| Anti-sticking agent | Level | Fresh flavor grade | Flavor difference |
|---|---|---|---|
| Lecithin | 625 ppm | 10.0 | |
| Sodium pyrophosphate | 100 ppm | 9.8 | 0.2 |
| Lecithin+<br>Sodium pyrophosphate | 625 ppm<br>100 ppm | 9.8 | 0.2 |
| Calcium phosphate, $Ca_3(PO_4)_2$ | 100 ppm | 10.0 | |
| Lecithin+<br>Calcium phosphate, $Ca_3(PO_4)_2$ | 625 ppm<br>100 ppm | 9.8 | 0.2 |

TABLE VII-B

| Anti-sticking agent | Level | Browned flavor grade | Flavor difference |
|---|---|---|---|
| Lecithin | 625 ppm | 10.0 | |
| Sodium pyrophosphate | 100 ppm | +8.1 | 1.9 |
| Lecithin+<br>Sodium pyrophosphate | 625 ppm<br>100 ppm | +8.3 | 1.7 |
| Calcium phosphate, $Ca_3(PO_4)_2$ | 100 ppm | +9.0 | 1.0 |
| Lecithin+<br>Calcium phosphate, $Ca_3(PO_4)_2$ | 625 ppm<br>100 ppm | +9.0 | 1.0 |

**Claims**

1. A frying or grilling, cooking fat composition, the composition being free of polyoxyethylene ethers of sorbitan partial esters and comprising:

(a) a major amount of edible triglycerides having saturated or unsaturated $C_{12}$ to $C_{22}$ fatty acid moieties;

(b) at least 0.001% of a salt of an oxyacid of phosphorus of formula MX as an anti-sticking agent, wherein M comprises alkali metal, alkali earth metal, mixed alkali metal-other metal, or ammonium and X comprises hypophosphate, orthophosphate, pyrophosphate, polyphosphate, or metaphosphate.

2. A composition according to Claim 1 further comprising lecithin as an anti-sticking agent.

3. A composition according to Claim 1 or 2 further comprising a minor component selected from flavorings, emulsifiers, anti-spattering agents, anti-foaming agents, and antioxidants.

4. A composition according to any of Claims 1 to 3 wherein the edible triglycerides and minor components are present in an amount up to 99.999% by weight of the composition.

5. A composition according to any of Claims 1 to 4 wherein the edible triglycerides comprise soybean oil.

6. A composition according to any of Claims 1 to 5 wherein the triglycerides further comprise a suspension of from 0.5% to 15%, preferably from 2% to 5% by weight of the composition of a triglyceride hardstock.

7. A composition according to Claim 6 wherein the triglyceride hardstock has an iodine value ranging from 1 to 12.

8. A composition according to any of Claims 1 to 7 wherein the salt of an oxyacid of phosphorus is present in an amount of from 0.01% to 0.5% by weight of the composition.

9. A composition according to any of Claims 1 to 8 wherein the phosphate salt is selected from ammonium phosphate, calcium phosphate, potassium phosphate, sodium phosphate, sodium pyrophosphate, sodium acid pyrophosphate, sodium hexametaphosphate and sodium aluminium phosphate.

**Patentansprüche**

1. Backölmischung, die frei von Polyoxyethylenäthern der Sorbitan-Teilester ist und

(a) einen größeren Teil eßbarer Triglyceride mit gesättigten oder ungesättigten $C_{12}$- und $C_{22}$-Fettsäureanteilen und

(b) wenigstens 0,01% eines Salzes einer Sauerstoffsäure von Phosphor der Formeln MX als ein Antihaftmittel enthält, worin M Alkalimetall, Erdalkalimetall und Alkalimetall gemischt mit anderem Metall oder Ammonium und X Hypophosphat, Orthophosphat, Pyrophosphat, Poliphosphat oder Metaphosphat umfassen.

2. Eine Mischung nach Anspruch 1, weiter enthaltend Lecithin als ein Antihaftmittel.

3. Eine Mischung nach Anspruch 1 oder 2, weiter umfassend eine kleinere Komponente ausgewählt aus Gewürzstoffen, Emulgierern, Antispritzmitteln, Antischäummitteln und antioxydierenden Mitteln.

4. Eine Zusammensetzung nach einem der Ansprüche 1 bis 3, worin die eßbaren Triglyceride und die kleinen Komponenten in einer Menge von bis zu 99,999 Gew.-% der Zusammensetzung vorhanden sind.

5. Eine Zusammensetzung nach einem der Ansprüche 1 bis 4, worin die eßbaren Triglyceride Sojabohnenöl umfassen.

6. Eine Zusammensetzung nach einem der Ansprüche 1 bis 5, worin die Glyceride weiter eine Suspension von 0,5 bis 15, vorzugsweise 2 bis 5 Gew.% der Mischung Triglycerid-Festanteile enthält.

7. Eine Mischung nach Anspruch 6, worin der Triglycerid-Festanteil einen Jodwert von 1 bis 12 hat.

8. Eine Mischung nach einem der Ansprüche 1 bis 7, worin das Salz einer Sauerstoffsäure von Phosphor in einer Menge von 0,01 bis 0,5 Gew.% der Mischung vorhanden ist.

9. Eine Mischung nach einem der Ansprüche 1 bis 8, worin das Phosphatsalz ausgewählt ist aus Ammoniumphosphat, Kalziumphosphat, Kaliumphosphat, Natriumphosphat, Natriumpyrophosphat, Natriumhydrogenpyrophosphat, Natriumhexametaphosphat und Natriumalluminiumphosphat.

**Revendications**

1. Composition de matière grasse pour la cuisine, pour frire ou griller, la composition étant exempte d'éthers polyoxyéthylénés d'esters partiels de sorbitanne et comprenant:

(a) une quantité majeure de triglycérides comestibles comportant des groupements acides gras en $C_{12}$—$C_{22}$ saturés ou insaturés;

(b) au moins 0,001% d'un sel d'un oxacide de phosphore de formule MX, comme agent anti-adhérence, où M comprend un métal alcalin, un métal alcalino-terreux, un mélange métal alcalin-autre métal ou un ammonium, et X comprend un hypophosphate, un orthophosphate, un pyrophosphate, un polyphosphate ou un métaphosphate.

2. Composition selon la revendication 1, comprenant en outre de la lécithine comme agent anti-adhérence.

3. Composition selon la revendication 1 ou 2, comprenant en outre un constituant mineur choisi parmi des arômes, des émulsifiants, des agents anti-projection, des agents anti-mousses et des anti-oxydants.

4. Composition selon l'une quelconque des revendications 1 à 3, dans laquelle les triglycérides comestibles et les constituants mineurs sont présents en une quantité allant jusqu'à 99,999% en poids de la composition.

5. Composition selon l'une quelconque des revendications 1 à 4, dans laquelle les triglycérides comestibles comprennent de l'huile de soja.

6. Composition selon l'une quelconque des revendications 1 à 5, dans laquelle les triglycerides comprennent en outre une suspension de 0,5% à 15%, de préférence de 2% à 5%, du poids de la composition, d'un triglycéride solide.

7. Composition selon la revendication 6, dans laquelle le triglycéride solide a un indice d'iode s'échelonnant de 1 à 12.

8. Composition selon l'une quelconque des revendications 1 à 7, dans laquelle le sel d'un oxacide de phosphore est présent en une quantité de 0,01% à 0,5% en poids de la composition.

9. Composition selon l'une quelconque des revendications 1 à 8, dans laquelle le sel phosphate est choisi parmi le phosphate d'ammonium, le phosphate de calcium, le phosphate de potassium, le phosphate de sodium, le pyrophosphate de sodium, le pyrophosphate acide de sodium, l'hexa-métaphosphate de sodium et l'aluminophosphate de sodium.